# EUROPÄISCHE PATENTSCHRIFT

(11) **EP 3 645 378 B1**
(45) Veröffentlichungstag und Bekanntmachung des Hinweises auf die Patenterteilung: **12.01.2022**
(21) Anmeldenummer: 18722469.6
(22) Anmeldetag: 03.05.2018
(51) Int. Cl.: B62K 21/08, B62K 21/12

(54) **MOTORRADLENKER MIT AKTIVER SCHWINGUNGSDÄMPFUNG**
MOTORCYCCLE STEERING BAR WITH ACTIVE OSCILLATION DAMPING
GUIDON DE MOTO AVEC UN SYSTÉME D'ANTI-VIBRATION ACTIF

(30) Priorität: 30.06.2017 DE 102017211111
(43) Veröffentlichungstag der Anmeldung: 06.05.2020
(73) Patentinhaber: Bayerische Motoren Werke Aktiengesellschaft, 80809 München (DE)
(72) Erfinder: GORDNER, Achim, 85253 Grossberghofen (DE)
(86) Internationale Anmeldenummer: PCT/EP2018/061241
(87) Internationale Veröffentlichungsnummer: WO 2019/001803

(56) Entgegenhaltungen:
- WO-A1-2016/154285
- DE-A1-102005 047 144
- DE-A1-102012 204 599
- US-A1- 2009 255 365

## Beschreibung

Die Erfindung betrifft einen Lenker für ein Motorrad oder ein motorradähnliches Fahrzeug, mit einer Schwingungsdämpfungsvorrichtung zum Dämpfen einer Schwingung des Lenkers gemäß dem Oberbegriff des Anspruchs 1 sowie das Motorrad oder motorradähnliches Fahrzeug mit dem entsprechenden Lenker gemäß dem Oberbegriff des Anspruchs 9.

Im Betrieb eines Fahrzeugs treten in der Regel Schwingungen bzw. Vibrationen unterschiedlicherer Frequenzen auf, die beispielsweise durch einen Antriebsmotor des Fahrzeugs, dessen Getriebe oder die Straße verursacht und auf einzelne Bauteile oder auf das gesamte Fahrzeug übertragen werden. Insbesondere im Bereich sogenannter Eigenfrequenzen werden diese Schwingungen für einen Nutzer in verstärktem und besonders störendem Maße spürbar.

Speziell bei Motorrädern oder motorradähnlichen Fahrzeugen werden diese Schwingungen über die Lenkergabel und die Lenkergriffe direkt an den Fahrer übertragen. Die Schwingungen sind somit für den Fahrer unmittelbar spürbar und können den Fahrkomfort erheblich beeinträchtigen. Bei längeren Fahrten können die Schwingungen sogar zu Taubheitsgefühlen in Fingern und Händen führen.

Aus dem Stand der Technik sind verschiedene Maßnahmen zur Reduzierung dieser Schwingungen beziehungsweise Vibrationen bekannt. So werden beispielsweise zur Dämpfung der Vibrationen Lenkergewichte an den Enden des Motorradlenkers verbaut, welche die Eigenfrequenz des Lenkers verändern und somit eine Anregung durch Vibrationen dieser Frequenz vermeiden sollen. Da die Lenkergewichte die Eigenfrequenz jedoch lediglich verschieben, wird auf diese Weise nur ein geringer Anteil der am Lenker ankommenden, breitbandigen Frequenzen gedämpft. Der verbleibende Anteil bleibt für den Fahrer deutlich spürbar.

Alternative Vorrichtungen sehen eine Schwingungsreduktion mithilfe von losem Material, wie beispielsweise Bleigranulat, vor, welches in einem Hohlraum im Inneren der Griffe vorgesehen ist. Dieses wird durch die einwirkenden Vibrationen in Eigenbewegung versetzt und dämpft somit die auftretenden Schwingungen ab. Eine derartige Vorrichtung ist zum Beispiel in der US 2005/0257978 A1 beschrieben.

Auch die Verwendung von schwingfähigen Massen, welche im Inneren des Lenkergriffs montiert sind und durch die auftretenden Schwingungen selbst in Schwingung versetzt werden, stellen eine weitere Möglichkeit der Schwingungsreduktion dar.

Mit Hilfe der genannten Vorrichtungen kann also lediglich eine teilweise oder nur in einem bestimmten Frequenzbereich wirksame Dämpfung vorgesehen werden. Demzufolge ist es nicht möglich, mit diesen Vorrichtungen einen gleichbleibenden Schwingungskomfort am Lenker bereitzustellen, der bei möglichst unterschiedlichen Fahrgeschwindigkeiten und unterschiedlichen Straßenbeschaffenheiten geschaffen werden kann.

Eine weitere Vorrichtung ist beispielsweise in der DE 10 2011 079 869 A1 beschrieben. Die US 2009/0255365 A1 zeigt einen Motorradlenker mit einer gattungsgemäßen Schwingungsdämpfungsvorrichtung.

Eine Aufgabe der Erfindung ist es daher, eine verbesserte Schwingungsdämpfungsvorrichtung bereitzustellen, insbesondere eine Schwingungsdämpfungsvorrichtung vorzusehen, die eine Dämpfungswirkung in einem möglichst breiten Frequenzspektrum bereitstellt.

Diese Aufgabe wird gelöst mit einem eine Schwingungsdämpfungsvorrichtung aufweisenden Lenker gemäß dem Gegenstand des Patentanspruchs 1 sowie einem Motorrad oder einem motorradähnlichen Fahrzeug gemäß dem Gegenstand des Patentanspruchs 9. Vorteilhafte Ausführungsformen ergeben sich aus den jeweils abhängigen Ansprüchen.

Demnach wird ein Lenker für ein Motorrad oder ein motorradähnliches Fahrzeug, mit einer Schwingungsdämpfungsvorrichtung bereitgestellt, welche zum Dämpfen einer ersten Schwingung des Lenkers ausgebildet ist. Hierzu ist die Schwingungsdämpfungsvorrichtung zum Erfassen der ersten Schwingung ausgebildet und umfasst mindestens einen mit dem Lenker schwingungsübertragend wirkgekoppelten Aktor, der in Reaktion auf die erfasste erste Schwingung zum Einleiten einer zweiten Schwingung in den Lenker betätigbar ist.

Es wird also ein Lenker bereitgestellt, der ein aktives Schwingungsdämpfungssystem aufweist, welches einen erhöhten Komfort für den Fahrer bietet, indem die zweite Schwingung in den Lenker eingeleitet wird. Hierzu muss zunächst die erste Schwingung, also die störende Schwingbewegung des Lenkers, erfasst werden und in Reaktion darauf der eine Aktor oder die mehreren Aktoren betätigt werden. Diese(r) ist/sind mit dem (schwingenden) Lenker verbunden, um den Lenker mit der zweiten Schwingung anzuregen. Eine Wirkkopplung zwischen dem mindestens einen Aktor und dem Lenker kann dadurch erfolgen, dass der jeweilige Aktor entweder innerhalb des Lenkers, also beispielsweise in einem durch den Lenker gebildeten Hohlraum, angeordnet ist. Alternativ kann der mindestens eine Aktor aber auch außerhalb des Lenkers angeordnet und schwingungsübertragend mit diesem verbunden sein.

Die zweite Schwingung kann derart ausgelegt sein, dass diese die erste Schwingung zumindest teilweise überlagert. Die Überlagerung kann derart abgestimmt sein, dass eine zumindest teilweise Auslöschung der ersten Schwingung durch die erzeugte zweite Schwingung erfolgt, um eine resultierende Schwingung des Lenkers sowie eine Übertragung auf den Fahrer zu reduzieren und somit einen Komfort zu steigern.

Gemäß einer Ausführungsform weist die von dem mindestens einen Aktor im betätigten Zustand erzeugte zweite Schwingung eine gleiche Frequenz wie die erste Schwingung sowie eine diesbezügliche Phasenverschiebung von im Wesentlichen ϕ = 180° auf. Dies bedeutet, dass die zweite Schwingung im Wesentlichen gegenphasig zu der ersten Schwingung erzeugt wird, um die zumindest teilweise Auslöschung der ersten Schwingung zu erzielen. Somit wird eine aktiv angesteuerte Schwingungsdämpfungsvorrichtung bereitgestellt, die nicht nur für eine spezifische (Eigen-)Frequenz des Lenkers ausgelegt ist, sondern variierbar und somit für einen breiten Frequenzbereich optimal einsetzbar ist. Dies ermöglicht besonders wirkungsvoll die erste Schwingung zu reduzieren beziehungsweise zu dämpfen.

Des Weiteren kann die zweite Schwingung eine im Wesentlichen gleich große Amplitude wie die erste Schwingung aufweisen. In diesem Fall kann eine im Wesentlichen vollständige Überlagerung und Auslöschung der ersten Schwingung mithilfe der als Gegenschwingung wirkenden, zweiten Schwingung erzielt werden. Mit anderen Worten wird auf diese Weise also eine Auslöschung durch eine destruktive Interferenz beider Schwingungen erzielt. Eine resultierende Schwingungsbewegung des Lenkers kann auf diese Weise vermieden werden, so dass dieser möglichst schwingungsfrei wird.

Zum Beispiel kann die Schwingungsdämpfungsvorrichtung mindestens einen Sensor zum Erfassen der ersten Schwingung und zum Erzeugen eines Signals in Reaktion auf die erfasste erste Schwingung umfassen.

Der mindestens eine Sensor kann jeweils als Beschleunigungssensor ausgebildet sein, insbesondere zum Erfassen einer Frequenz und/oder einer Amplitude der ersten Schwingung in mindestens einer Raumrichtung, vorzugsweise in allen drei Raumrichtungen. Diese Ausgestaltungsformen ermöglichen eine möglichst exakte Erfassung der ersten Schwingung, die auf den Lenker einwirkt. Dies bildet die Voraussetzung für eine möglichst exakte Abstimmung der von dem Aktor erzeugten zweiten Schwingung, um die erste Schwingung zu überlagern. Beispielsweise kann ein Beschleunigungssensor zentral, also in einem mittleren Abschnitt des Lenkers, angeordnet sein. Alternativ oder zusätzlich kann jeweils ein (weiterer) Beschleunigungssensor im Bereich der Lenkergriffe angeordnet sein.

Auch kann die Schwingungsdämpfungsvorrichtung eine Steuereinheit umfassen, welche zum Empfang des von dem mindestens einen Sensor erzeugten Signals sowie zum Ansteuern des mindestens einen Aktors in Reaktion auf das von dem mindestens einen Sensor empfangene Signal ausgebildet ist. So kann es ermöglicht werden, das von dem einen oder den mehreren Sensor(en) jeweils empfangene Signal mittels in der Steuereinheit hinterlegter Anweisungen, zum Beispiel mittels eines Regelalgorithmus, zu verarbeiten und in Reaktion hierauf der eine Aktor oder die mehreren Aktoren anzusteuern. Im Rahmen der Verarbeitung kann beispielsweise eine Invertierung des empfangenen Signals zur Erzeugung des Phasenversatzes erfolgen und jeweils ein Ansteuerungssignal an den mindestens einen Aktor versendet werden. Selbstverständlich kann im Falle mehrerer Aktoren jeder Aktor entweder ein für alle Aktoren einheitliches Signal oder ein für jeden Aktor individuelles Signal erhalten. Die individuellen Signale können sich insbesondere hinsichtlich Frequenz, Amplitude und/oder Phasenverschiebung des jeweils durch den zugehörigen Aktor zu erzeugenden zweiten Signals unterscheiden. Die Ansteuerung kann über eine analog arbeitende Steuerelektronik erfolgen, aber auch über eine mikroprozessorgesteuerte Einheit, die über einen entsprechenden Algorithmus und/ oder angepasste mathematische Modelle verfügt. Auch ein lernender Algorithmus ist bei einer entsprechend ausgeführten Sensorik möglich.

Ferner kann der mindestens eine Aktor einem mittleren Abschnitt des Lenkers oder einem Lenkerende zugeordnet sein, oder jeweils ein Aktor einem jeweiligen Lenkerende des Lenkers zugeordnet sein. Die mittige Anordnung bietet sich beispielsweise an, wenn eine besonders leichte und kompakte Ausführungsform erforderlich ist. Dagegen ermöglicht die Zuordnung eines ersten Aktors zu einem ersten Ende des Lenkers und die Zuordnung eines zweiten Aktors zu einem zweiten Ende des Lenkers eine besonders leistungsfähige Schwingungsüberlagerung. In jedem Fall können bei Verwendung mehrerer Aktoren diese separat voneinander angesteuert werden, zum Beispiel hinsichtlich Frequenz, Amplitude, Phasenverschiebung und/oder Zeit.

Des Weiteren kann der mindestens eine Aktor jeweils eine rotierende Schwungmasse mit Unwucht umfassen oder als hydraulischer, pneumatischer, elektrischer oder piezoelektrischer Aktor ausgebildet sein.

Außerdem wird ein Motorrad oder ein motorradähnliches Fahrzeug, mit einem Lenker zum Steuern bereitgestellt, welcher gemäß dieser Beschreibung ausgebildet ist.

Als motorradähnliche Fahrzeuge sind insbesondere zweirädrige, dreirädrige oder vierrädrige Motorroller, Scooter, Trikes oder Quads zu verstehen.

Es wird also ein Lenker bereitgestellt, der ein aktives Schwingungsdämpfungssystem aufweist und dem Fahrer einen erhöhten Komfort bietet, indem störende Schwingungen beziehungsweise Vibrationen (verursacht beispielsweise durch eine Straßenanregung, einen Verbrennungsmotor oder das Getriebe) mittels einer gezielt erzeugten Gegenschwingung - der zweiten Schwingung - ausgelöscht werden. Mit Hilfe der aktiven Schwingungsdämpfungsvorrichtung kann die zweite Schwingung individuell auf die erste Schwingung angepasst werden, so dass eine optimale Anpassung an unterschiedliche Frequenzen ermöglicht wird, die mittels passiver Systeme nicht möglich wäre, welche lediglich auf eine konkrete Eigenfrequenz ausgelegt sind und diese verschieben.

Aufgrund der sich hieraus ergebenden kompakten und leichten Bauweise kann auf schwere passive Massen, wie zum Beispiel Lenkergewichte, verzichtet werden, wodurch eine Massenträgheit des gesamten Lenkers verbessert und eine leichtere und schnellere Lenkbewegung ermöglicht wird.

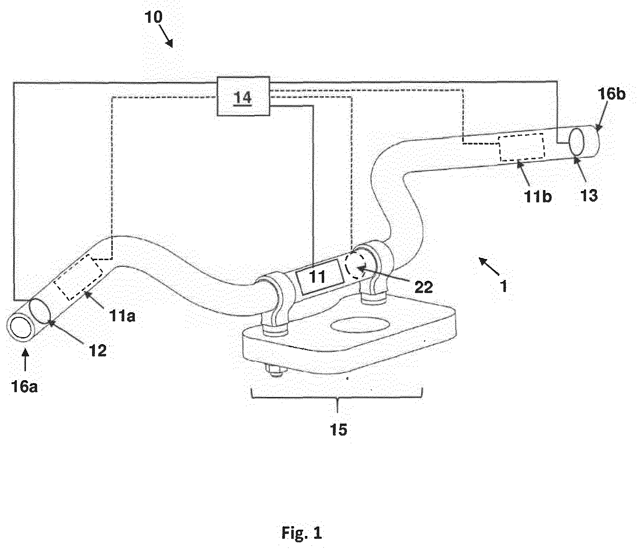

Die Erfindung wird nachfolgend anhand eines Ausführungsbeispiels unter Bezugnahme auf die Zeichnung näher erläutert.

In der einzigen Figur ist in perspektivischer Ansicht ein Lenker 1 für ein Motorrad oder ein motorradähnliches Fahrzeug dargestellt.

Der Lenker 1 umfasst eine lediglich schematisch angedeutete Schwingungsdämpfungsvorrichtung 10, welche zum Dämpfen einer ersten Schwingung des Lenkers 1 ausgebildet ist. Die Schwingungsdämpfungsvorrichtung 10 ist hierzu zum Erfassen der ersten Schwingung ausgebildet und umfasst einen mit dem Lenker 1 schwingungsübertragend wirkgekoppelten Aktor 11, der in Reaktion auf die erfasste erste Schwingung zum Einleiten einer zweiten Schwingung in den Lenker 1 betätigbar ist. Zum Beispiel kann die von dem Aktor im betätigten Zustand erzeugte zweite Schwingung eine gleiche Frequenz wie die erste Schwingung sowie eine diesbezügliche Phasenverschiebung von im Wesentlichen ϕ = 180° aufweisen. Zusätzlich kann die zweite Schwingung eine im Wesentlichen gleich große Amplitude wie die erste Schwingung aufweisen. Auf diese Weise erfolgt eine Auslöschung durch eine destruktive Interferenz beider Schwingungen.

Zum Erfassen der ersten Schwingung umfasst die Schwingungsdämpfungsvorrichtung 10 in der dargestellten Ausführungsform zwei Sensoren 12,13. Diese sind außerdem zum Erzeugen eines Signals in Reaktion auf die erfasste erste Schwingung ausgebildet. Beispielsweise können als Sensoren 12,13 Beschleunigungssensoren eingesetzt werden, um eine Frequenz und/oder die Amplitude der ersten Schwingung in mindestens einer Raumrichtung zu bestimmen. Für ein möglichst optimales Dämpfungsergebnis ist eine Erfassung in allen drei Raumrichtungen besonders geeignet. In der dargestellten Ausführungsform sind die beiden Sensoren 12,13 einem jeweiligen Lenkerende 16a, 16b zugeordnet. Alternativ oder zusätzlich kann ein (weiterer) Sensor 22 auch in einem mittleren Abschnitt 15 des Lenkers angeordnet sein.

Um die von den Sensoren 12,13,22 erzeugten Signale zu empfangen und zu verarbeiten, umfasst die Schwingungsdämpfungsvorrichtung 10 außerdem eine mit den Sensoren 12,13,22 wirkgekoppelte Steuereinheit 14. In Reaktion auf die von den Sensoren 12,13,22 empfangenen Signale erzeugt die Steuereinheit 14 ein Signal zum Ansteuern des Aktors 11.

Der Aktor 11 ist gemäß der dargestellten Ausführungsform in dem mittleren Abschnitt 15 des Lenkers 1 angeordnet. Alternativ oder zusätzlich ist es aber auch möglich den Aktor 11 in einem Bereich zwischen dem mittleren Abschnitt 15 und dem Lenkerende 16a,16b, oder den einzelnen Aktor 11 im Bereich eines der beiden Lenkerenden 16a,16b anzuordnen. Ebenso ist es möglich jeweils einen eigenen (weiteren) Aktor 11a,11b jeweils einem der Lenkerenden 16a,16b zuzuordnen (gestrichelt dargestellt).

In jedem Fall kann jeder der Aktoren 11,11a,11b jeweils eine rotierende Schwungmasse mit Unwucht umfassen oder als hydraulischer, pneumatischer, elektrischer oder piezoelektrischer Aktor ausgebildet sein.

## Patentansprüche

1. Lenker (1) für ein Motorrad oder ein motorradähnliches Fahrzeug, mit einer Schwingungsdämpfungsvorrichtung (10), welche zum Dämpfen einer ersten Schwingung des Lenkers (1) ausgebildet ist, wobei die Schwingungsdämpfungsvorrichtung (10) zum Erfassen der ersten Schwingung ausgebildet ist, **dadurch gekennzeichnet, dass** die Schwingungsdämpfungsvorrichtung mindestens einen mit dem Lenker (1) schwingungsübertragend wirkgekoppelten Aktor (11,11a,11b) umfasst, der in Reaktion auf die erfasste erste Schwingung zum Einleiten einer zweiten Schwingung in den Lenker (1) betätigbar ist.

2. Lenker (1) nach Anspruch 1 **dadurch gekennzeichnet, dass** die von dem mindestens einen Aktor (11,11a,11b) im betätigten Zustand erzeugte zweite Schwingung eine gleiche Frequenz wie die erste Schwingung sowie eine diesbezügliche Phasenverschiebung von im Wesentlichen ϕ = 180°aufweist.

3. Lenker (1) nach Anspruch 2, **dadurch gekennzeichnet, dass** die zweite Schwingung eine im Wesentlichen gleich große Amplitude wie die erste Schwingung aufweist.

4. Lenker (1) nach mindestens einem der Ansprüche 1 bis 3, **dadurch gekennzeichnet, dass** die Schwingungsdämpfungsvorrichtung (10) mindestens einen Sensor (12,13,22) zum Erfassen der ersten Schwingung und zum Erzeugen eines Signals in Reaktion auf die erfasste erste Schwingung umfasst.

5. Lenker (1) nach Anspruch 4, **dadurch gekennzeichnet, dass** der mindestens eine Sensor (12,13,22) als Beschleunigungssensor ausgebildet ist, insbesondere zum Erfassen einer Frequenz und/oder einer Amplitude der ersten Schwingung in mindestens einer Raumrichtung, vorzugsweise in allen drei Raumrichtungen.

6. Lenker (1) nach einem der Ansprüche 4 oder 5, **dadurch gekennzeichnet, dass** die Schwingungsdämpfungsvorrichtung (10) eine Steuereinheit (14) umfasst, welche zum Empfang des von dem mindestens einen Sensor (12,13,22) erzeugten Signals sowie zum Ansteuern des mindestens einen Aktors (11,11a,11b) in Reaktion auf das empfangene Signal ausgebildet ist.

7. Lenker (1) nach einem der Ansprüche 1 bis 6, **dadurch gekennzeichnet, dass** der mindestens eine Aktor (11,11a,11b) einem mittleren Abschnitt (15) des Lenkers (1) oder einem Lenkerende (16a,16b) zugeordnet ist, oder jeweils ein Aktor (11a,11b) einem jeweiligen Lenkerende (16a,16b) des Lenkers (1) zugeordnet ist.

8. Lenker (1) nach einem der Ansprüche 1 bis 7, **dadurch gekennzeichnet, dass** der mindestens eine Aktor (11,11a,11b) jeweils eine rotierende Schwungmasse mit Unwucht umfasst oder als hydraulischer, pneumatischer, elektrischer oder piezoelektrischer Aktor ausgebildet ist.

9. Motorrad oder motorradähnliches Fahrzeug, mit einem Lenker (1) zum Steuern, **dadurch gekennzeichnet, dass** der Lenker (1) nach einem der Ansprüche 1 bis 8 ausgebildet ist.

## Claims

1. Handlebar (1) for a motorcycle or a motorcycle-type vehicle, with an oscillation damping mechanism (10) embodied to damp a first oscillation of the handlebar (1), wherein the oscillation damping mechanism (10) is embodied to detect the first oscillation, **characterized in that** the oscillation damping mechanism comprises at least one actuator (11,11a,11b) that is actively coupled to the handlebar (1) so as to transmit oscillations, which is actuatable in response to the detected first oscillation to introduce a second oscillation into the handlebar (1).

2. Handlebar (1) according to Claim 1, **characterized in that** the second oscillation generated by the at least one actuator (11,11a,11b) in the actuated state has the same frequency as the first oscillation as well as a related phase shift of essentially ϕ = 180°.

3. Handlebar (1) according to Claim 2, **characterized in that** the second oscillation has an essentially equal amplitude to the first oscillation.

4. Handlebar (1) according to at least one of Claims 1 to 3, **characterized in that** the oscillation damping mechanism (10) comprises at least one sensor (12,13,22) for detecting the first oscillation and generating a signal in response to the detected first oscillation.

5. Handlebar (1) according to Claim 4, **characterized in that** the at least one sensor (12,13,22) is embodied as an accelerometer, in particular for detecting a frequency and/or an amplitude of the first oscillation in at least one spatial direction, preferably in all three spatial directions.

6. Handlebar (1) according to one of Claims 4 or 5, **characterized in that** the oscillation damping mechanism (10) comprises a control unit (14) that is embodied to receive the signal generated by the at least one sensor (12,13,22) as well as for controlling the at least one actuator (11,11a,11b) in response to the received signal.

7. Handlebar (1) according to any one of Claims 1 to 6, **characterized in that** the at least one actuator (11,11a,11b) is assigned to a middle section (15) of the handlebar (1) or a handlebar end (16a,16b), or each actuator (11a,11b) is assigned to a respective handlebar end (16a,16b) of the handlebar (1).

8. Handlebar (1) according to any one of Claims 1 to 7, **characterized in that** the at least one actuator (11,11a,11b) each comprises a rotating flywheel mass with an imbalance or is embodied as a hydraulic, pneumatic, electric or piezoelectric actuator.

9. Motorcycle or motorcycle-type vehicle, with a handlebar (1) for steering, **characterized in that** the handlebar (1) is embodied according to any one of Claims 1 to 8.

## Revendications

1. Guidon (1) destiné à une motocyclette ou à un véhicule similaire à une motocyclette, ledit guidon comprenant un dispositif d'amortissement de vibrations (10) qui est conçu pour amortir une première vibration du guidon (1), le dispositif d'amortissement de vibrations (10) étant conçu pour détecter la première vibration, **caractérisé en ce que** le dispositif d'amortissement de vibrations comprend au moins un actionneur (11, 11a, 11b) qui est accouplé fonctionnellement au guidon (1) de manière à transmettre des vibrations et qui peut être actionné pour injecter une deuxième vibration dans le guidon (1) en réaction à la première vibration détectée.

2. Guidon (1) selon la revendication 1, **caractérisé en ce que** la deuxième vibration générée par l'au moins un actionneur (11, 11a, 11b) à l'état actionné a la même fréquence que la première vibration et un déphasage associé de sensiblement ϕ = 180°.

3. Guidon (1) selon la revendication 2, **caractérisé en ce que** la deuxième vibration a sensiblement la même amplitude que la première vibration.

4. Guidon (1) selon l'une au moins des revendications 1 à 3, **caractérisé en ce que** le dispositif d'amortissement de vibrations (10) comprend au moins un capteur (12, 13, 22) destiné à détecter la première vibration et à générer un signal en réaction à la première vibration détectée.

5. Guidon (1) selon la revendication 4, **caractérisé en ce que** l'au moins un capteur (12, 13, 22) est conçu comme un capteur d'accélération, destiné notamment à détecter une fréquence et/ou une amplitude de la première vibration dans au moins une direction spatiale, de préférence dans les trois directions spatiales.

6. Guidon (1) selon l'une des revendications 4 et 5, **caractérisé en ce que** le dispositif d'amortissement de vibrations (10) comprend une unité de commande (14) qui sert à recevoir le signal généré par l'au moins un capteur (12, 13, 22) et commander l'au moins un actionneur (11, 11a, 11b) en réaction au signal reçu.

7. Guidon (1) selon l'une des revendications 1 à 6, **caractérisé en ce que** l'au moins un actionneur (11, 11a, 11b) est associé à une portion médiane (15) du guidon (1) ou à une extrémité de guidon (16a, 16b) ou un actionneur (11a, 11b) est associé à une extrémité respective (16a, 16b) du guidon (1).

8. Guidon (1) selon l'une des revendications 1 à 7, **caractérisé en ce que** l'au moins un actionneur (11, 11a, 11b) comprend une masse centrifuge rotative à balourd ou est conçu comme un actionneur hydraulique, pneumatique, électrique ou piézoélectrique.

9. Motocyclette ou véhicule assimilé à une motocyclette, comprenant un guidon (1) destiné à la direction, **caractérisé en ce que** le guidon (1) est conçu selon l'une des revendications 1 à 8.
